Europäisches Patentamt

European Patent Office

Office européen des brevets

(19)

(11) Publication number: **0 024 185**
**B1**

# (12) EUROPEAN PATENT SPECIFICATION

(45) Date of publication of patent specification: **21.03.84**

(51) Int. Cl.³: **B 23 K 1/06**

(21) Application number: **80302753.1**

(22) Date of filing: **11.08.80**

(54) **Soldering apparatus.**

(30) Priority: **14.08.79 JP 103401/79**

(43) Date of publication of application:
**25.02.81 Bulletin 81/8**

(45) Publication of the grant of the patent:
**21.03.84 Bulletin 84/12**

(84) Designated Contracting States:
**DE FR GB IT**

(56) References cited:
**DE - A - 2 009 842**
**JP - B - 53 009 180**
**US - A - 3 610 508**

(73) Proprietor: **ASAHI GLASS COMPANY LTD.**
**No. 1-2, Marunouchi 2-chome**
**Chiyoda-ku, Tokyo (JP)**

(72) Inventor: **Igarashi, Hitoshi,**
**1-19-15 Shibuya-ku**
**Tokyo (JP)**

(74) Representative: **Warden, John Christopher et al,**
**R.G.C. Jenkins & Co. 12-15, Fetter Lane**
**London EC4A 1PL (GB)**

Courier Press, Leamington Spa, England.

### Soldering apparatus

The present invention relates to an apparatus for soldering on a surface of a substrate having a low susceptibility to solder, such as a ceramic substrate. More particularly, it relates to an automatic soldering apparatus by which a soldering operation can be easily carried out to obtain uniform products.

Products obtained by soldering a lead wire or the like on a substrate of low susceptibility to solder, such as glass, ceramic, porcelain, silicon or germanium have been widely used, particularly in the electronics and automobile industries. Various improvements in substrates and operations have been proposed.

Among known apparatus for coating a solder on a surface of a substrate of low susceptibility to the solder, there has been proposed (see for example JP—B—53-9180) apparatus for coating a solder on a surface of a glass product by applying ultrasonic vibration to a soldering tip which is vertically slidable towards and away from the substrate and rotatably mounted on a supporting base and depositing solder on a surface, contacting the end of the tip with the surface of the substrate. In the operation of such apparatus, the operator has to place the end of the tip precisely at the position of soldering and moreover, the time for applying the ultrasonic vibration to the solder is limited. Therefore, it is not easy to obtain uniform soldered products even when the apparatus is operated by an expert.

US—A—3610508 discloses apparatus for soldering together tinned components, in which a plunger is used to detect the progress of a soldering operation as a function of the movement together of the parts being soldered. The plunger is in contact with one of said parts and its movement is recorded on a gauge. A vibrator is provided to prevent sticking.

It is an object of the present invention to provide apparatus for soldering on a ceramic or other substrate which is difficult to solder on such as glass wherein the end of a soldering tip is easily set at the precise position required on the surface of the substrate, and which can automatically control the period for which the ultrasonic vibration is applied to the vibration tip after setting it at the precise position.

The present invention provides apparatus for soldering on a substrate having a low susceptibility to solder which apparatus comprises a soldering tip which is rotatably mounted on, and vibrated by, an ultrasonic oscillation mechanism and slidable towards and away from an object to be soldered, characterized in that a needle assembly is positioned at a predetermined distance in a predetermined direction from the end of said soldering tip and having a needle which projects to at least the same level in the direction of the object to be soldered, as that of said end of said soldering tip, to assist in positioning the tip for soldering.

The tip of the needle can easily be seen by the operator, and can thus be used to determine precisely the position of the vibration head relative to the object being soldered. If desired, a marker can be provided in a position on the substrate such that when the needle touches the marker the vibration head is in the correct position for soldering.

A preferred embodiment of the present invention will now be described with reference to the accompanying drawings wherein:

Figure 1 is a front elevation of one embodiment of apparatus according to the present invention for soldering on a ceramic substrate;

Figure 2 is an enlarged side elevation of part of the apparatus of Figure 1;

Figure 3 is a part sectional front elevation of the vibration tip and positioning mechanism of the apparatus of Figures 1 and 2 and

Figure 4 is an electric circuit diagram for the apparatus of Figures 1 to 3.

The position of the needle assembly depends upon the size and configuration of the object to be soldered and the direction in which the soldering apparatus is to move during the operation. Usually, it is preferable to position the needle assembly so that it contacts a conveniently positioned and clearly visible mark on the substrate, indicating when the tip is in the correct position for soldering. When the object to which solder is applied is small, a special auxiliary substrate or extension can be provided to carry the mark which guides the needle.

In one embodiment of the present invention, the needle projects beyond the end of the soldering tip in a direction towards the substrate and is retractable into a cylindrical holder when urged into contact with the substrate.

In this embodiment, the ultrasonic vibration can be automatically applied to the soldering tip by connecting the needle assembly to a sensor which thus indirectly detects the approach of the end of the tip to the surface of the substrate to start the ultrasonic oscillation of the tip. It is also possible to set a predetermined period for applying the ultrasonic vibration by connecting a timer between the ultrasonic oscillation mechanism for the soldering tip and the starting mechanism, whereby the oscillation automatically ceases after a predetermined time interval following its initiation by retraction of the needle.

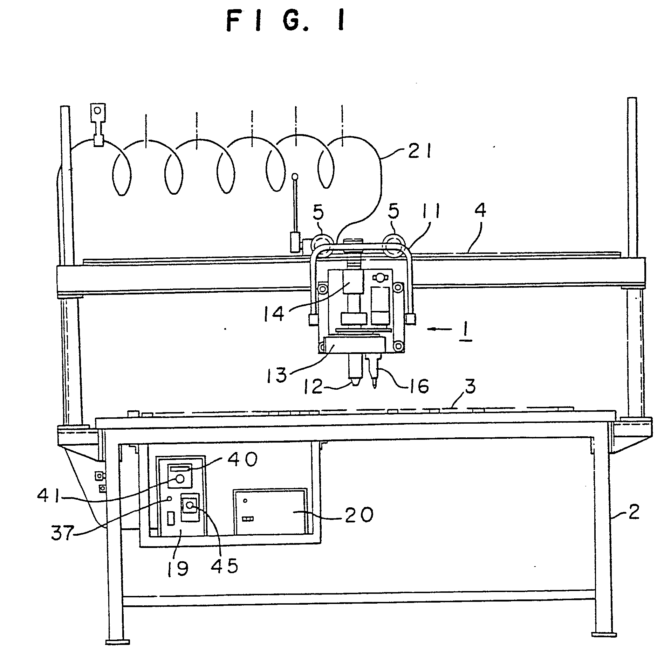

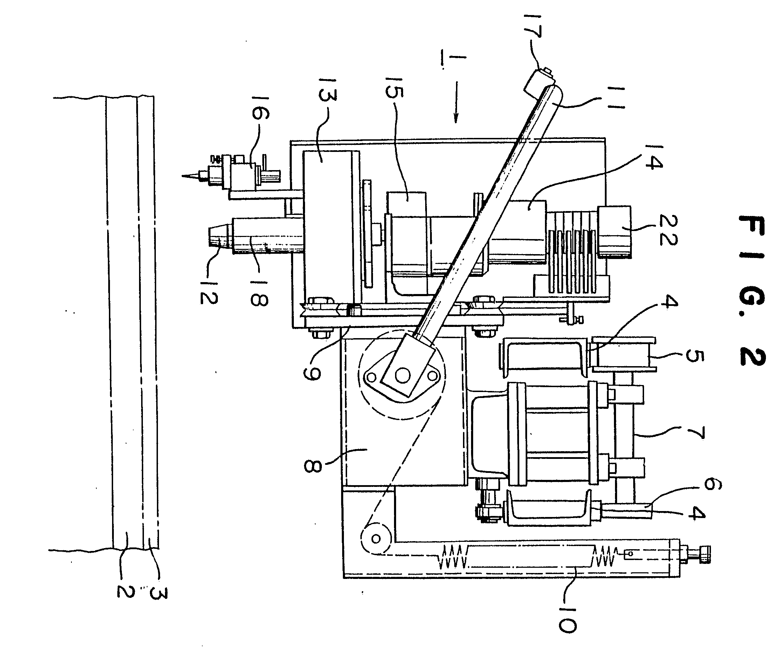

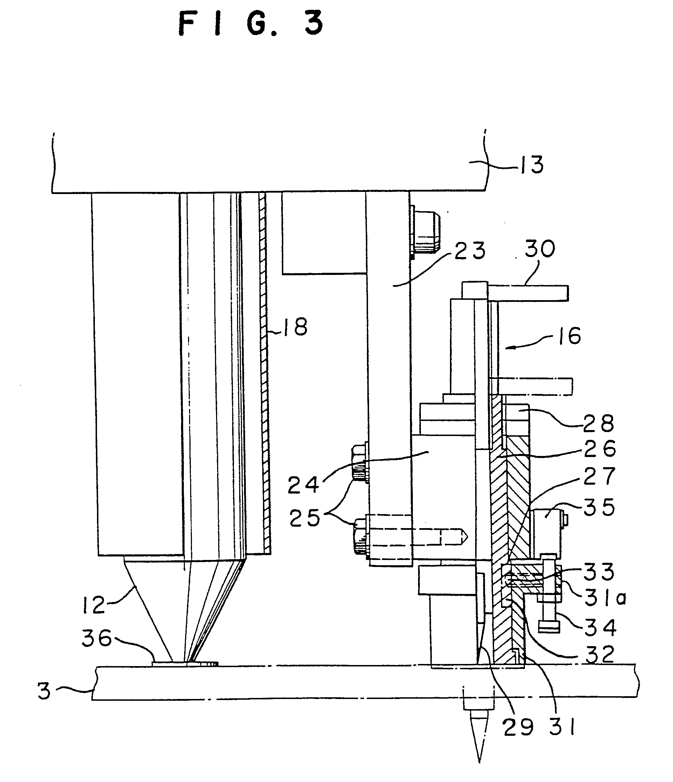

In Figures 1, 2 and 3, the reference numeral (1) designates soldering apparatus in accordance with the embodiment of the present invention; (2) designates a table on which a substrate (3) such as a glass product is placed for soldering thereon; parallel rails (4), (4) for shifting the soldering apparatus (1) horizontally relative to the substrate (3) for soldering are held above the object (3). The soldering apparatus (1) is mounted on a vertically slidable carriage which is mounted in grooves (9) formed on a side wall of a holder (9) mounted on a shaft (7) of a pair of wheels (5), (6) which fun on the rails (4), (4). The effect of gravity on the soldering apparatus (1) is balanced by a tensile spring mechanism (10) whereby the vertical downward movement of the soldering apparatus (1) towards the substrate can be smoothly effected by the downward operation of a handle (11) against the tension of the spring (10), which pulls the apparatus back up when the handle is released.

In the apparatus shown in the drawings, the soldering apparatus (1) of the present invention is suspended on the parallel rails (4), (4). It is also possible to lay parallel rails on the upper surface of the table (2) and to run thereon a wheeled carriage supporting the soldering apparatus for vertical movement towards and away from the substrate.

The soldering apparatus (1) comprises a vibration tip (12) having a flat end surface having substantially the same area as the area for soldering; a driving mechanism for holding and rotating the vibration tip; a bearing box (13) including a heater for heating the end of the tip; an ultrasonic vibrator unit (14) which is mounted at the upper end of the soldering tip to impart the ultrasonic vibration; a water cooling box (15) for preventing heat conduction to the vibrator unit; and a positioning mechanism (16) which precisely determines the position of the end of the tip during soldering, when lined up with a reference point on the substrate spaced from the soldering point.

The reference numeral (17) designates a push button switch on the handle (11) for starting the rotation of the soldering tip (12); (18) designates a heat sealing cover for the tip; (19) designates a control mechanism for controlling the heated temperature of the tip and the timing operation of the ultrasonic vibrator unit (14); (20) designates an ultrasonic oscillator. There elements are connected through cables (21) to a terminal box (22) of the soldering apparatus (1).

The positioning mechanism (16) is mounted on the bearing box (13) and comprises a slide-block (24) fixed by bolts (25) on the end of a clamp plate which extends parallel to the soldering tip (12). A shiftable axial holder (26) is received in a hollow part of the side-block (24) and clamped to the slide-block (24) by a ring nut (28) screwed on a threaded part (47) of the holder (26) and clamping the slide-block against a shoulder (27) of the holder. The holder (26) is also hollow and has a needle (29) mounted on a shaft extending through the holder. The position of the top of the needle (29) is set at a predetermined distance, in a predetermined direction, from the soldering tip. A mark is formed on the surface of the substrate depending upon said distance and direction, and the tip of the needle is placed on the mark whereby the end of the soldering tip is placed in position for soldering. Therefore, the soldering operation can be easily performed even when the operator only has experience of conventional apparatus. Therefore, precise positioning can be attained, giving a high quality product.

The needle (29) can extend to substantially the same level as the end of the tip (12). However, in a preferred embodiment, the needle normally projects beyond the end of the tip and is retractable into the hollow part of the holder (26). As the tip (12) descends, the end of the needle contacts the surface of the glass product and is pushed back into the hollow part of the holder (26) as the tip (12) descends further. For this purpose, the shaft carrying the needle (29) extends axially above the holder (26) and a stopper (30) extends radially outwardly to limit the axial movement of the needle.

The soldering apparatus of the present invention can have a mechanism for automatically starting the ultrasonic vibration of the soldering tip (12) when the end of the tip approaches the surface of the substrate for soldering. For this purpose, a vertical slot (32) is formed in a lower part of the holder (26) and a limit switch operation ring (31) which can be vertically slid over a short distance is fitted around the outer surface of the holder (26) with a screw key (33) retained in the slot. A control screw (34) is screwed upwardly into a screw hole formed in a flange (31a) of the operation ring (31). The end of the control screw comes into contact with the push pin of a limit switch (35) mounted on the slide-block (24).

Adjustment of the distance from the substrate at which ultrasonic vibration commences is carried out as follows.

The soldering tip is kept in a non-vibrating state and the end of the tip (12) is brought into contact with a space gauge (36) (having for example, a thickness of 0.2 mm) placed on the surface of the substrate (3). In this condition, the bolts (25) are adjusted to bring the lower end of the holder (26) into contact with the surface of the substrate so as to adjust the position of the slide-block (24). The axial position of the control bolt (34) is adjusted by screwing it in so as to operate the limit switch (35). When said adjusting operation has been carried out, the limit switch (35) is actuated when the soldering tip (12) reaches a distance of 0.2 mm from the surface of the glass product, whereby a signal is transmitted to the ultrasonic oscillator (20) to actuate the ultrasonic vibration unit.

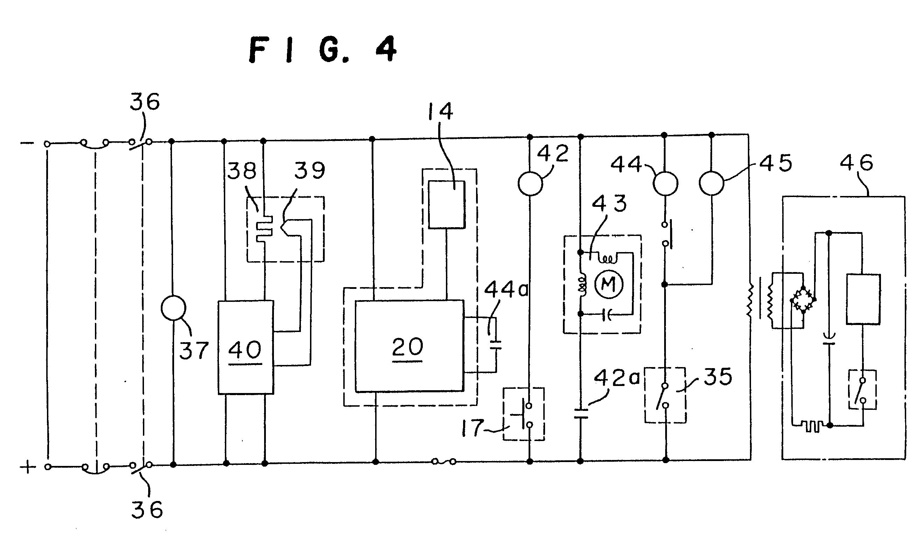

Referring to Figure 4, an AC power source (100 Volt) is connected to the input terminals of the apparatus of the present invention. A pilot lamp (37) indicating the application of power is turned on and an electric heater (38) (500 W) is actuated to heat the soldering tip. The temperature of the tip is measured by a thermocouple (39). The temperature is indicated by a temperature indicated (40) of the control mechanism (19). The temperature of the soldering tip (12) can be controlled by a temperature control dial (41). The soldering apparatus (1) is shifted by the operator to above the position for soldering the handle (11) is operated to lower the apparatus towards the substrate and the push button (17) is pushed to actuate a relay (42). A contact (42a) of the relay (42) is closed to drive a motor (43) whereby the soldering tip (12) is rotated. The handle (11) is further operated by the operator to bring the needle (29) down to the mark on the substrate and to bring the soldering tip (12) to a predetermined distance above the surface of the substrate, whereby the limit switch operation ring (31) is brought into contact with the surface of the substrate and is pushed upwardly relative to the slide-block (24) and the limit switch (35) is actuated. Therefore, the relay (44) is actuated to close the contact (44a) whereby the ultrasonic oscillation mechanism (20) is actuated. A timer (45) is connected in parallel to the relay (44) so as to set the period for applying the ultrasonic vibration. At the end of this period, the relay (44) is deactuated to open the contact (44a) whereby the ultrasonic oscillator is stopped. A flow rate detector (46) for coolant water for cooling the soldering tip is connected.

As described above, using apparatus in accordance with the present invention, the correct position for soldering on the substrate is precisely indicated by the needle whereby the quality of the soldered product is kept remarkably high and experience is not required on the part of the operator so that operation speeds can be remarkably improved.

## Claims

1. Apparatus for soldering on a substrate having a low susceptibility to solder which apparatus comprises a soldering tip (12) which is rotatably mounted on, and vibrated by, an ultrasonic oscillation mechanism (14) and slidable towards and away from an object (3) to be soldered, characterized in that a needle assembly (16) is positioned at a predetermined distance in a predetermined direction from the end of said vibrating soldering tip and having a needle which projects to at least the same level in the direction of the object to be soldered, as that of said end of said soldering tip, to assist in positioning the soldering tip for soldering.

2. Apparatus according to Claim 1 characterized in that the needle projects slightly beyond the end of said soldering tip and is backwardly shiftable on contact with said object (3) to be soldered.

3. Apparatus according to Claim 2 characterized in that ultrasonic vibration is automatically applied to said soldering tip (12) when said needle (26) is retracted through a predetermined distance.

4. Apparatus according to Claim 3 further characterized by starting mechanism for the ultrasonic vibration which comprises a limit switch (35) and an operating ring (31) which is fitted around a holder (26) for the needle and vertically slidable relative to the limit switch.

5. Apparatus according to Claim 3 or 4 characterized in that said ultrasonic vibration is also controlled by a timer mechanism (45) whereby the vibration stops after a predetermined period.

## Revendications

1. Appareil permettant de souder sur un substrat peu apte à la soudure, appareil comprenant une pointe à souder (12) montée tournante sur un mécanisme d'oscillation ultrasonique (14) qui le fait vibrer et pouvant s'approcher et s'éloigner d'un objet (3) à souder par glissement, caractérisé en ce qu'un ensemble à aiguille (16) est positionné à une distance prédéterminée, selon une direction prédéterminée, de l'extrémité de la pointe à souder vibrante et comprend une aiguille qui fait saillie au moins jusqu'au même niveau, en direction de l'objet devant être soudé, que celui de ladite extrémité de ladite pointe à souder, pour faciliter le positionnement de la pointe à souder en vue d'effectuer une soudure.

2. Appareil selon la revendication 1, caractérisé en ce que l'aiguille fait saillie légèrement au-delà de l'extrémité de la pointe à souder et peut reculer au contact dudit objet (3) devant être soudé.

3. Appareil selon la revendication 2, caractérisé en ce que la vibration ultrasonique est appliquée automatiquement à ladite pointe à souder (12) lorsque ladite aiguille (26) a reculé d'une distance prédéterminée.

4. Appareil selon la revendication 3, caractérisé en outre par un mécanisme de déclenchement de la vibration ultrasonique qui comprend un interrupteur de fin de course (35) et une bague d'actionnement (31) qui est montée autour d'un support (26) de l'aiguille et qui peut coulisser verticalement par rapport à l'interrupteur de fin de course.

5. Appareil selon la revendication 4 ou 4, caractérisé en ce que ladite vibration ultrasonique est commandée aussi par un mécanisme minuteur (45) pour que la vibration s'arrête après une durée prédéterminée.

## Patentansprüche

1. Vorrichtung zum Löten auf einem Substrat mit geringer Empfänglichkeit für Lötmittel, mit einer Lötspitze (12), welche in einem Ultraschall-Oszillationsmechanismus (14) drehbar eingebaut ist und durch diesen in Vibration versetzt wird und gleitend auf ein zu lötendes Objekt (3) hin-bzw. von diesem wegbewegbar ist, dadurch gekennzeichnet, daß eine Nadeleinrichtung (16) mit einem vorbestimmten Abstand in einer vorbestimmten Richtung vom Ende der vibrierenden Lötspitze positioniert ist und eine Nadel aufweist, welche bis zumindest dem gleichen Niveau in der Richtung des zu lötenden Objekts hervorragt, wie das Niveau des Endes der Lötspitze, um bei der Positionierung der Lötspitze zu helfen.

2. Vorrichtung nach Anspruch 1, dadurch gekennzeichnet, daß die Nadel gerinfügig über das Ende der Lötspitze hinausragt und bei Kontakt mit dem zu lötenden Objekt (3) rückwärts verschiebbar ist.

3. Vorrichtung nach Anspruch 2, dadurch gekennzeichnet, daß die Lötspitze (12) automatisch mit Ultraschallvibration beaufschlagt wird, wenn die Nadel (26) über eine vorbestimmte Strecke zurückgezogen ist.

4. Vorrichtung nach Anspruch 3, weiter gekennzeichnet durch Startmechanismen für die Ultraschallvibration, welche einen Begrenzungsschalter (35) und einen Betätigungsring (31) umfassen, welcher passend um einen Halter (26) für die Nadel angeordnet ist und bezüglich des Begrenzungsschalters in vertikaler Richtung verschiebbar ist.

5. Vorrichtung nach Anspruch 3 oder 4, dadurch gekennzeichnet, daß die Ultraschallvibration auch durch einen Zeitmessermechanismus (45) gesteuert wird, wodurch die Vibration nach einer vorbestimmten Zeitspanne aufhört.

# F I G. I

# F I G. 2

# F I G. 3

FIG. 4